# EUROPEAN PATENT APPLICATION

(11) **EP 4 112 364 A1**
(43) Date of publication of application: **04.01.2023**
(21) Application number: 21181936.2
(22) Date of filing: 28.06.2021
(51) Int. Cl.: B60L 53/14, B60L 55/00

(54) **CHARGING SYSTEM FOR AN AT LEAST PARTIALLY ELECTRICALLY OPERATED MOTOR VEHICLE AS WELL AS A METHOD FOR OPERATING A CHARGING SYSTEM**

(71) Applicant: Bayerische Motoren Werke Aktiengesellschaft, 80809 München (DE)
(72) Inventor: Bogen, Michelle, Santa Clara, 95054 (US); Molina, Vincent, Mountain View, 94043 (US)

(57) **Abstract**

The invention relates to a charging system (10) for an at least partially electrically operated motor vehicle (12), wherein the motor vehicle (12) comprises a DC connecting element (16) of the charging system (10), wherein the DC connecting element (16) is connected with a battery (14) of the motor vehicle (12), and wherein the DC connecting element (16) comprises a plug element (20) for connecting the DC connecting element (16) with a plug (22) of the charging system (10) outside of the motor vehicle (12), characterized in that the charging system (10) comprises a mobile bidirectional AC/DC transformer (24), which transforms alternating current (AC) into direct current (DC) or vice versa, wherein a DC side (26) of the mobile bidirectional AC/DC transformer (24) is configured to be connected with the plug element (20) of the DC connecting element (16) outside of the motor vehicle (12).

## Description

The invention relates to a charging system for an at least partially electrically operated motor vehicle according to claim 1. Furthermore, the invention relates to a method for operating a charging system.

V2X describes a technology enabling a motor vehicle to exchange energy with the grid (V2G), the home (V2H), another vehicle (V2V) or any other component connected to the vehicle, for example power bank, or electric devices. According to the current state of the art of the technology there are two possibilities known. Whether the technology is integrated in the motor vehicle, through an onboard bidirectional AC-charger or the user needs to install at home a bidirectional DC-Charger sometimes called DC-Wallbox.

The first solution requires an expensive integration, as the onboard charger has additionally geometrical constraints, for example, weight and volume has to be as low as possible, together with very constraining regulatory requirements to fulfill. This solution may not have a high longevity as well as the on-board AC-Charger may disappear in future because of an only DC-Charging landscape, making the previous expensive developments obsolete. The second solution has the main drawback to limit the access to V2X to the "at home" use case as the Wallbox is installed at the user's home. For example, if the user wants to charge at an AC-public-charging-station, he will not be offered the bidirectional feature. Moreover, in some market, for example the United States market, most of the at least partially electrically motor vehicles users already have an AC-Charging station at home and would have to replace it or install an additional DC-bidirectional charging station.

FR 3 014 260 A1 discloses a method of controlling a bidirectional charger of a motor vehicle battery comprising a rectifier stage connected at the input to a power supply network and at the output of the conversion stage and at a capacitor, the conversion stage being connected to the battery, the conversion stage comprising a first set of transistors connected in series output to a resonant circuit and to the transformer, the transformer being connected to a second set of transistors connected to the battery. The method comprises the following steps: controlling the first set at the natural frequency of this resonant circuit, if the battery voltage is lowered than a threshold voltage, controlling the transformer so that a first transformation ratio is achieved, otherwise controlling the transformer so that a second transformation ratio, greater than the first ratio, is achieved.

It is an object of the invention to provide a charging system as well as a method, by which a more efficient way for a bidirectional charging with a motor vehicle is realized.

This object is solved by a charging system as well as a method according to the independent claims. Advantageous forms of configurations are presented in the dependent claims.

One aspect of the invention relates to a charging system for an at least partially electrically operated motor vehicle, wherein the motor vehicle comprises a DC connecting element of the charging system, wherein the DC connecting element is connected with a battery of the motor vehicle, and wherein the DC connecting element comprises a plug element for connecting the DC connecting element with a plug of the charging system outside of the motor vehicle.

In an embodiment, the charging system comprises a mobile bidirectional AC/DC transformer, which transforms alternating current into direct current or vice versa, wherein a DC side of the mobile bidirectional AC/DC transformer is configured to be connected with the plug element of the DC connecting element outside of the motor vehicle.

Therefore the invention provides that the at least partially electric motor vehicle gets access to the V2X advantages to every out of the home use cases without having to be at the expensive development cost and weight/volume drawbacks of an on-board integration. The main idea of the invention is to making the conversion device, in other words the mobile AC/DC transformer device, mobile, so it is not part of the motor vehicle, but can be carried in the motor vehicle, if the user wants that.

The mobile AC/DC transformer may be connected to already existing AC-home charger in order to offer the bidirectional feature or transported in the motor vehicle in provision of a usage of a public charging station or at work. This has the advantage, that the customer/user has the flexibility to choose when he wants to use V2X and don't need to replace its already installed AC-home charger. The OEMs (Original Equipment Manufacturer) doesn't need to make an expensive development for a technology, which may be obsolete in future, for example as the mobile AC/DC transformer has less development constraints as an onboard charger, it can be developed with more reasonable costs. The OEM can also spare an AC-charger in his vehicle as it is not necessary anymore.

In an advantageous form of configuration, the mobile bidirectional AC/DC transformer is configured to be connected with an electric grid on an AC side of the mobile bidirectional AC/DC transformer. For example, the battery of the motor vehicle may be charged by connecting the mobile bidirectional AC/DC transformer with the electrical grid. However, the energy, which is stored in the battery of the motor vehicle may also be transmitted to the electrical grid, for example if electric energy is needed in the electrical grid for others consumers. Therefore, the charging system is configured to be used in a so-called smart grid.

In another embodiment, the mobile bidirectional AC/DC transformer comprises a housing. In particular, the housing may be used to protect the mobile bidirectional AC/DC transformer as well as to protect a user of the mobile bidirectional AC/DC transformer, for example against electric shocks.

Furthermore, the housing is waterproof and/or dustproof. In particular, if the motor vehicle is charged or discharged, the motor vehicle is in surroundings, wherein weather conditions can change. By building the housing waterproof and/or dustproof, the mobile bidirectional AC/DC transformer can be used in different surroundings.

According to another embodiment, the mobile bidirectional AC/DC transformer is cooled by air. Therefore, an easy way for cooling the mobile bidirectional AC/DC transformer is provided. In particular, when the mobile bidirectional AC/DC transformer transforms electrical energy from alternating current to direct current or vice versa, electrical parts of the mobile bidirectional AC/DC transformer may produce heat, which needs to be absorbed. This can be done by air cooling, which is an easy way of cooling the mobile bidirectional AC/DC transformer.

In another advantageous form of configuration the mobile bidirectional AC/DC transformer is configured for charging and discharging the battery. In particular, the mobile bidirectional AC/DC transformer is bidirectional and not unidirectional. Therefore, the motor vehicle can be part of a so-called V2X structure in order to be charged by an electric grid or in order to provide electrical energy for the electrical grid or other electrical devices, which needs alternating current. Furthermore, the mobile bidirectional AC/DC transformer comprises an arranging element for arranging the mobile bidirectional AC/DC transformer at a wall. Therefore, the mobile bidirectional AC/DC transformer may be hanged on a wall beside of an AC charging station at home.

According to another embodiment the mobile bidirectional AC/DC transformer comprises at least one high power plug, in particular several high power plugs, to connect electric devices requiring AC-Voltage. Therefore the mobile bidirectional AC/DC transformer can be used for example for an electric outdoor grill, a construction, gardening or camping tools, trailer lights and other electric equipment including solar panels enabling also to charge the vehicle while camping.

Another aspect of the invention relates to a method for operating a charging system for a at least partially electrical operated motor vehicle, wherein an alternating current is transformed into a direct current by a mobile AC/DC transformer of the charging system outside of the motor vehicle and the direct current is transmitted to a DC connecting element of the charging system, which is arranged at the motor vehicle, and the DC connecting element is connected with a battery of the motor vehicle for charging the battery, or the direct current is transmitted by the battery of the motor vehicle to the DC connecting element and the DC connecting element transmits the direct current to the AC/DC transformer, which transforms the direct current into the alternating current, and the AC/DC transformer provides the alternating current.

Advantageous forms of the charging system are to be regarded as advantageous forms of the method for operating the charging system. The charging system comprises means for performing the method.

Further features of the invention result from the claims, the figures and the figure description. The features and combinations of features mentioned above in the description, as well as the features and combinations of features mentioned below in the description of figures and/or shown alone in the figures, can be used not only in the combination indicated in each case, but also in other combinations or on their own.

The invention will now be explained in more detail with reference to a preferred embodiment and with reference to the drawings. Showing:
- Fig. 1: a schematic view according to an embodiment of a charging system; and
- Fig. 2: another schematic view according to another embodiment of the charging system.

In the figures the same elements or elements having the same function are indicated by the same reference signs.

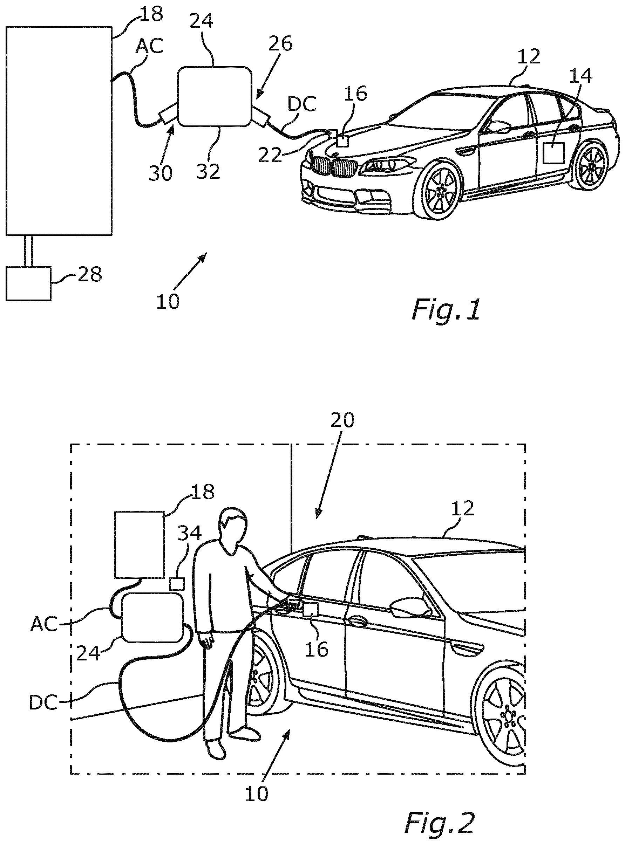

Fig. 1 shows a schematic view according to an embodiment of a charging system 10. A at least partially electrical operated motor vehicle 12 is shown, wherein the motor vehicle 12 comprises at least one battery 14. The motor vehicle 12/the charging system 10 comprises a DC connecting element 16. Furthermore, a charging station 18, which may be for example a public charging station, is shown, wherein the charging station 18 provides charging with alternating current AC. In particular, Fig. 1 shows the charging system 10 for the at least partially electrically operated motor vehicle 12, wherein the motor vehicle 12 comprises the DC connecting element 16 of the charging system 10, wherein the DC connecting element 16 is connected with the battery 14 of the motor vehicle 12, and wherein the DC connecting element 16 comprises a plug element 20 (Fig. 2) for connecting the DC connecting element 16 with a plug 22 of the charging system 10 outside of the motor vehicle 12.

The charging system 10 comprises a mobile bidirectional AC/DC transformer 24, which transforms the alternating current AC into a direct current DC or vice versa, wherein a DC side 26 of the mobile bidirectional AC/DC transformer 24 is configured to be connected with the plug element 22 of the DC connecting element 16 outside of the motor vehicle 12.

In particular, the mobile bidirectional AC/DC transformer 16 is configured to be connected with an electrical grid 28 on an AC side 30 of the mobile bidirectional AC/DC transformer 16.

Furthermore, the Fig. 1 shows that the mobile bidirectional AC/DC transformer 16 comprises a housing 32. The housing 32 may be waterproof and/or dustproof. Furthermore, the mobile bidirectional AC/DC transformer 16 is cooled by air. The mobile bidirectional AC/DC transformer 16 is configured for charging and discharging the battery 14.

In particular, Fig. 1 shows that a customer, which may be for example the owner of the motor vehicle 12, may charge and discharge the battery 14 while his motor vehicle 12 is connected to the public charging station 18 or also to a private charging station 18, and get for example rewarded by the utility for sharing his battery capacity. Instead of an AC-public charging station 18, it is also possible that another motor vehicle (V2V) is connected, which wants to share a charge to reach a destination or a robot vehicle which needs energy for its electric oven, its air condition or wants to charge the vehicle with photovoltaic panels.

Fig. 2 shows another embodiment according to the charging system 10. In particular it is shown that the charging station 10 may be for example a home charger, which is not bidirectional.

In particular, the mobile bidirectional AC/DC transformer 16 may comprise an arranging element 34 for arranging the mobile bidirectional AC/DC transformer 16 at a wall. Furthermore, the mobile bidirectional AC/DC transformer may comprise at least one high power plug, in particular several high power plugs, to connect electric devices requiring AC-Voltage. Therefore the mobile bidirectional AC/DC transformer can be used for example for an electric outdoor grill, a construction, gardening or camping tools, trailer lights and other electric equipment including solar panels enabling also to charge the vehicle while camping.

In particular, Fig. 2 shows that the customer may charge and discharge while the motor vehicle 12 is connected at home and get rewarded for example, by the utility for sharing his battery capacity. The customer may optimize his electricity consumption, in particular, using the energy of the battery 14 when the electricity tariffs are high, and charge the motor vehicle 12 when the tariffs are low, furthermore, the customer may optimize his consumption of renewable energy by charging the battery 14 when renewable energy is available, for example when the house is equipped with solar panels, and use it later.

### List of Reference Signs

- 10: charging system
- 12: motor vehicle
- 14: battery
- 16: DC connecting element
- 18: charging station
- 20: plug element
- 22: plug
- 24: mobile bidirectional AC/DC transformer
- 26: DC side
- 28: electrical grid
- 30: AC side
- 32: housing
- 34: arranging element
- AC: alternating current
- DC: direct current

## Claims

1. Charging system (10) for a least partially electrically operated motor vehicle (12), wherein the motor vehicle (12) comprises a DC connecting element (16) of the charging system (10), wherein the DC connecting element (16) is connected with a battery (14) of the motor vehicle (12), and wherein the DC connecting element (16) comprises a plug element (20) for connecting the DC connecting element (16) with a plug (22) of the charging system (10) outside of the motor vehicle (12), **characterized in that**
the charging system (10) comprises a mobile bidirectional AC/DC transformer (24), which transforms alternating current (AC) into direct current (DC) or vice versa, wherein a DC side (26) of the mobile bidirectional AC/DC transformer (24) is configured to be connected with the plug element (20) of the DC connecting element (16) outside of the motor vehicle (12).

2. Charging system (10) according to claim 1,
**characterized in that**
the mobile bidirectional AC/DC transformer (24) is configured to be connected with an electrical grid (28) on an AC side (30) of the mobile bidirectional AC/DC transformer (24).

3. Charging system (10) according to claim 1 or 2,
**characterized in that**
the mobile bidirectional AC/DC transformer (24) comprises a housing (32).

4. Charging system (10) according to claim 3,
**characterized in that**
the housing (32) is waterproof and/or dustproof.

5. Charging system (10) according to any of claims 1 to 4,
**characterized in that**
the mobile bidirectional AC/DC transformer (24) is cooled by air.

6. Charging system (10) according to any of claims 1 to 5,
**characterized in that**
the mobile bidirectional AC/DC transformer (24) is configured for charging and discharging the battery (14).

7. Charging system (10) according to any of claims 1 to 6,
**characterized in that**
the mobile bidirectional AC/DC transformer (24) comprises an arranging element (34) for arranging the mobile bidirectional AC/DC transformer (24) at a wall.

8. Charging system (10) according to any of claims 1 to 7,
**characterized in that**
the mobile bidirectional AC/DC transformer (24) comprises at least one high power plug to connect electric devices requiring AC-Voltage.

9. Method for operating a charging system (10) for a least partially electrically operated motor vehicle (12), wherein an alternating current (AC) is transformed into a direct current (DC) by a mobile AC/DC transformer (24) of the charging system (10) outside of the motor vehicle (12) and the direct current (DC) is transmitted to a DC connecting element (16) of the charging system (10), which is arranged at the motor vehicle (12), and the DC connecting element (16) is connected with a battery (14) of the motor vehicle (12) for charging the battery (14), or the direct current (DC) is transmitted by the battery (14) of the motor vehicle (12) to the DC connecting element (16) and the DC connecting element (16) transmits the direct current (DC) to the mobile AC/DC transformer (24), which transforms the direct current (DC) into the alternating current (AC), and the mobile AC/DC transformer (24) provides the alternating current (AC).
